# EUROPEAN PATENT APPLICATION

(11) **EP 4 451 436 A1**
(43) Date of publication of application: **23.10.2024**
(21) Application number: 23854264.1
(22) Date of filing: 04.08.2023
(51) Int. Cl.: H01M 50/147, H01M 50/209

(54) **BATTERY CELL, BATTERY, AND ELECTRICAL DEVICE**

(30) Priority: 19.08.2022 WO PCT/CN2022/113651
(71) Applicant: Contemporary Amperex Technology Co., Limited, Ningde, Fujian 352100 (CN)
(72) Inventor: LEI, Yuyong, Ningde, Fujian 352100 (CN); GUO, Zhijun, Ningde, Fujian 352100 (CN); WANG, Peng, Ningde, Fujian 352100 (CN); JIN, Haizu, Ningde, Fujian 352100 (CN); LI, Chuan, Ningde, Fujian 352100 (CN)
(74) Representative: Gong, Jinping
(86) International application number: PCT/CN2023/111255
(87) International publication number: WO 2024/037361

(57) **Abstract**

Embodiments of the present application provide a battery cell, a battery and an electricity consumption device. The battery cell includes: an electrode assembly which includes a body portion and a tab extending from the body portion; a housing configured to accommodate the electrode assembly and provided with a first opening; a first end cover configured to cover the first opening; and a tab support located between the first end cover and the body portion and configured to support the tab, wherein the first end cover is provided with a first clamping structure, the tab support is provided with a second clamping structure, and the first clamping structure is clamped with the second clamping structure. By means of the technical solutions in the embodiments of the present application, the reliability of the battery cell can be improved.

## Description

### CROSS-REFERENCE TO RELATED APPLICATIONS

The present application claims to be entitled to the right of priority for the international application PCT/CN2022/113651 titled "BATTERY CELL, BATTERY AND ELECTRICITY CONSUMPTION DEVICE" and submitted on August 19, 2022, and the entire content of the international application is incorporated into the present application by reference.

### TECHNICAL FIELD

The present application relates to the technical field of batteries, in particular to a battery cell, a battery and an electricity consumption device.

### BACKGROUND

With the increasing of the environmental pollution, people pay more and more attention to the new energy industry. In the new energy industry, a battery technique is a vital factor for its development.

Design factors in multiple aspects need to be considered for the development of the battery technique, for example, the energy density, the cycle life, the reliability, etc., and the structure of a battery cell is critical to the reliability of a battery. Therefore, how to provide a battery cell to improve the reliability of a battery is an urgent technical problem.

### SUMMARY

The present application provides a battery cell, a battery and an electricity consumption device, and can improve the reliability of the battery.

In a first aspect, the battery cell is provided and comprises: an electrode assembly which comprises a body portion and a tab extending from the body portion; a housing configured to accommodate the electrode assembly and provided with a first opening; a first end cover configured to cover the first opening; and a tab support located between the first end cover and the body portion and configured to support the tab, wherein the first end cover is provided with a first clamping structure, the tab support is provided with a second clamping structure, and the first clamping structure is clamped with the second clamping structure.

In embodiments of the present application, the battery cell comprises the electrode assembly, the housing, the first end cover and the tab support. In the battery cell, the electrode assembly comprises the body portion and the tab extending from the body portion, the housing is provided with the first opening and configured to accommodate the electrode assembly, the first end cover is configured to cover the first opening, and the tab support is located between the first end cover and the body portion and configured to support the tab. Thus, the problems of short circuiting and the like caused by the fact that the tab is reversely inserted into the electrode assembly due to the fact that the tab is too long can be reduced, and the reliability of the battery can be improved. The first end cover is provided with the first clamping structure, the tab support is provided with the second clamping structure, and the first clamping structure is clamped with the second clamping structure, so that the first clamping structure is fixedly connected to the second clamping structure, and the tab support is fixedly connected to the first end cover. Thus, under the circumstance that the battery cell is shaken or inverted, the tab support is fixed to the first end cover, the risk of loosening or movement of the tab support in the battery cell is reduced, and the reliability of the battery cell can be improved.

In a possible implementation, the first clamping structure is a protruding structure protruding towards the electrode assembly in a first direction, the second clamping structure is an open structure corresponding to the protruding structure, and the first direction is a thickness direction of the first end cover.

The protruding structure protruding towards the electrode assembly is arranged on the first end cover, the open structure corresponding to the protruding structure is arranged on the tab support, and the protruding structure can be clamped into the open structure, thereby realizing clamping of the protruding structure and the open structure. In addition, the protruding structure and the open structure are convenient to machine, so that the complexity in production can be reduced.

In a possible implementation, the open structure comprises a guide portion, a radial size of the guide portion is gradually reduced from a first end of the guide portion to a second end of the guide portion, in the first direction, the first end of the guide portion is further from the electrode assembly than the second end of the guide portion, and the first direction is the thickness direction of the first end cover. Thus, the guide portion can guide the protruding structures to be clamped into the open structures along the guide portions.

In a possible implementation, the protruding structure, the guide portion, the housing and the tab support satisfy the following equation: D1 - d1 ≥ K', where, D1 is a radial size of the first end of the guide portion; d1 is a radial size of a first end of the protruding structure, and the first end of the protruding structure is an end of the protruding structure close to the electrode assembly in the first direction; and K' is the sum of gaps between the housing and the tab support in a second direction, and the second direction is a length direction of the first end cover.

In said implementation, by reasonably configuring the relationship between D1 - d1 and K', when the tab support relatively greatly deviates from the first end cover in the second direction, the guide portion can guide the protruding structure to enter the open structure.

In a possible implementation, the protruding structure, the guide portion, the housing and the tab support satisfy the following equation: D1 - d1 ≥ WO - W1, where, D1 is a radial size of the first end of the guide portion; d1 is a radial size of a first end of the protruding structure, and the first end of the protruding structure is an end of the protruding structure close to the electrode assembly in the first direction; WO is a distance between inner walls of the housing in a second direction; and W1 is the size of the tab support in the second direction, and the second direction is the length direction of the first end cover.

In said implementation, the difference value of D1 - d1 is great, so that when the tab support relatively greatly deviates from the first end cover in the second direction, the guide portions can guide the protruding structure to be clamped into the open structure, thereby realizing clamping of the protruding structure and the open structure.

In a possible implementation, the open structure further comprises a clamping groove portion, the clamping groove portion is connected to the second end of the guide portion in the first direction, and the clamping groove portion is clamped with the protruding structure. Thus, the protruding structure is clamped into the clamping groove portion, limiting between the open structure and the protruding structure in the first direction can be realized, and fixing of the first end cover and the tab support in the first direction can be realized.

In a possible implementation, the clamping groove portion comprises a limiting portion and an accommodating portion, the accommodating portion is closer to the electrode assembly than the limiting portion, and a radial size D2 of the limiting portion is smaller than a radial size D3 of the accommodating portion. Thus, the limiting portion and the accommodating portion form step structures, after the protruding structure enter the accommodating portion, the protruding structure can be partially accommodated in the accommodating portion, and the limiting portion can limit the movement of the protruding structure in the first direction, thereby reducing the risk of separating of the protruding structure from the accommodating portion.

In a possible implementation, the open structure further comprises a first fixing portion, the first fixing portion is connected to the first end of the guide portion, and the radial size of the first fixing portion is the same as the radial size D1 of the first end of the guide portion. Thus, under the circumstance that the protruding structure is clamped into the open structure, the first fixing portion can be fixed to the protruding structure in the second direction, thereby limiting the relative movement of the tab support and the first end cover in the second direction.

In a possible implementation, an included angle between the guide portion and the first direction is smaller than 45 degrees. Thus, the guide portion can guide the protruding structure to be clamped into the open structures.

Optionally, the included angle between the guide portion and the first direction is greater than or equal to 30 degrees. Thus, the included angles have relatively appropriate values, the guide portion have appropriate heights in the first direction, and meanwhile, the guide portion can conveniently guide the protruding structure to be clamped into the open structure.

In a possible implementation, the protruding structure comprises a second fixing portion and a buckle portion, the buckle portion is closer to the electrode assembly than the second fixing portion, the buckle portion is clamped with the clamping groove portion of the open structure, and the second fixing portion abuts against the first fixing portion of the open structure.

In said implementation, the buckle portion is clamped with the clamping groove portion, thereby limiting the relative movement of the protruding structure and the open structure in the first direction; and the first fixing portion abuts against the second fixing portion, thereby limiting the relative movement of the protruding structure and the open structure in the second direction.

In a possible implementation, in the first direction, the size of the second fixing portion is smaller than or equal to the size of the first fixing portion. Thus, the second fixing portion can be conveniently fixed in the first fixing portion.

In a possible implementation, in the first direction, the size of the second fixing portion is greater than 0.8 mm, and/or the size of the first fixing portion is greater than 0.8 mm. Thus, the size of the first fixing portion and the size of the second fixing portion in the first direction are relatively great, the contact area between the first fixing portion and the second fixing portion is relatively large, and the connection strength between the first fixing portion and the second fixing portion can be increased.

In a possible implementation, in the first direction, the size h1 of the second fixing portion is as follows: 0.8 mm < h1 ≤ 1.4 mm, and/or the size h2 of the first fixing portion is as follows: 0.8 mm < h2 ≤ 1.4 mm. Thus, the first fixing portion and the second fixing portion have the appropriate sizes in the first direction, and meanwhile, the connection strength between the first fixing portion and the second fixing portion is appropriate.

In a possible implementation, the buckle portion comprises a connecting portion and a clamping portion, the clamping portion is closer to the electrode assembly than the connecting portion, the maximum radial size of the clamping portion is greater than the maximum radial size of the connecting portion, and the clamping portion is clamped with the clamping groove portion. Thus, the clamping portion can be clamped in the clamping groove portion, and the risk of separating of the clamping portion from the clamping groove portion can be reduced.

In a possible implementation, the buckle portion is provided with a deformation groove, and the deformation groove extends in the first direction from the end of the buckle portion close to the electrode assembly. Thus, the deformation groove is deformed when the clamping portion enters the clamping groove portion, so as to enable the clamping portion to be clamped into the clamping groove portion. When the buckle portion passes the limiting portion, the size of the buckle portion in the second direction can be reduced, so that the buckle portion can enter the accommodating portion to realize clamping of the buckle portion and the clamping groove portion.

In a possible implementation, the clamping groove portion, the buckle portion and the deformation groove are as follows: d3 > D2 > d3 - d4, where, d3 is the maximum radial size of the clamping portion, D2 is the maximum radial size of the limiting portion, and d4 is the maximum radial size of the deformation groove. Thus, the buckle portion can be clamped in the clamping groove portion, and the risk of separating of the buckle portion from the clamping groove portion can be reduced.

In a possible implementation, the buckle portion and the clamping groove portion are as follows: d3 - D2 > 0.5 mm. Thus, the buckle portion and the clamping groove portion have many overlap areas, and the risk of separating of the buckle portion from the clamping groove portion can be reduced.

In a possible implementation, the clamping groove portion, the buckle portion and the deformation groove are as follows: D2 - d3 + d4 > 0.2 mm. Thus, there are relatively large gaps between the clamping groove portion and the buckle portion, and the buckle portion can be embedded in the clamping groove portion.

In a possible implementation, the protruding structure further comprises a transition portion, and in the first direction, the transition portion is respectively connected to the respective second fixing portion and the respective buckle portion. Thus, through arrangement of the transition portion, the second fixing portion and the buckle portion can be connected together.

In a possible implementation, in the first direction, the size of the protruding structure is smaller than or equal to the size of the open structure. Thus, after the protruding structure is clamped with the open structure, the protruding structure cannot protrude out of the open structure, and the risk of damage to the electrode assembly due to the fact that the protruding structure exceeds the open structure can be reduced.

In a possible implementation, a cross section of the first clamping structure and the second clamping structure is circular. Thus, the first clamping structure and the second clamping structure can be assembled and limited in both the length direction and the width direction of the battery cell.

In a possible implementation, the tab support is provided with a groove extending in the second direction, and the tab is configured to pass through the groove to be connected to the first end cover. Thus, the tab can pass through the groove of the tab support to be connected to the first end cover, thereby limiting and fixing the tab by means of the groove of the tab support.

In a possible implementation, the battery cell further comprises a first diaphragm, wherein the first diaphragm is sleeved on an outer surface of the electrode assembly and is located in the housing. Through arrangement of the first diaphragm, the electrode assembly can be isolated from the housing, and the risk of short circuiting due to the contact between the electrode assembly and the housing can be reduced; in addition, the tab support can be connected to the electrode assembly by means of the diaphragm, thereby facilitating assembly of the battery cell.

In a possible implementation, the battery cell further comprises a second diaphragm, wherein the second diaphragm is sleeved on an outer surface of the housing. The second diaphragm can play a role in protecting the battery cell and insulating the battery cell from the external environment, and thus the reliability of the battery cell can be improved.

In a possible implementation, the first end cover is provided with a plurality of the first clamping structures, and the tab support is provided with a plurality of the second clamping structures corresponding to the plurality of first clamping structures. Thus, the connection strength between the tab support and the first end cover can be increased.

In a possible implementation, the first end cover further comprises an insulating member and an end cover sheet, the insulating member is configured to isolate the end cover sheet from the electrode assembly, and the insulating member and the first clamping structures are of an integrally-formed structure. Thus, machining of the first clamping structures and the insulating member is facilitated.

In a possible implementation, the battery cell further comprises a second end cover, wherein the second end cover and the first end cover are arranged opposite each other in the first direction, and the first direction is the thickness direction of the first end cover.

In a second aspect, the battery is provided and comprises the battery cell in the first aspect and any possible implementation of the first aspect.

In a third aspect, the electricity consumption device is provided and comprises the battery in the second aspect.

In the embodiments of the present application, the battery cell comprises the electrode assembly, the housing, the first end cover and the tab support. In the battery cell, the electrode assembly comprises the body portion and the tab extending from the body portion, the housing is provided with the first opening and configured to accommodate the electrode assembly, the first end cover is configured to cover the first opening, and the tab support is located between the first end cover and the body portion and configured to support the tab. Thus, the problems of short circuiting and the like caused by the fact that the tab is reversely inserted into the electrode assembly due to the fact that the tab is too long can be reduced, and the reliability of the battery can be improved. The first end cover is provided with the first clamping structure, the tab support is provided with the second clamping structure, and the first clamping structure is clamped with the second clamping structure, so that the first clamping structure is fixedly connected to the second clamping structure, and the tab support is fixedly connected to the first end cover. Thus, under the circumstance that the battery cell is shaken or inverted, the tab support is fixed to the first end cover, the risk of loosening or movement of the tab support in the battery cell is reduced, and the reliability of the battery cell can be improved.

### BRIEF DESCRIPTION OF THE DRAWINGS

In order to explain technical solutions of embodiments of the present application more clearly, drawings needed in the embodiments of the present application will be briefly introduced below. Obviously, the drawings in the following description are only some embodiments of the present application, and for those of ordinary skill in the art, other drawings can be obtained according to these drawings without involving any inventive effort.
FIG. 1 is a structural schematic diagram of a vehicle in an embodiment of the present application;
FIG. 2 is a structural schematic diagram of a battery in an embodiment of the present application;
FIG. 3 is a structural schematic diagram of a battery cell in an embodiment of the present application;
FIG. 4 is a structural schematic diagram of a first end cover in an embodiment of the present application;
FIG. 5 is a structural schematic diagram of a tab support in an embodiment of the present application;
FIG. 6 is an enlarged schematic diagram of a partial structure of an electrode assembly in FIG. 3;
FIG. 7 is a top view of a tab support in an embodiment of the present application;
FIG. 8 is a sectional view of the tab support in FIG. 7 in the direction C-C;
FIG. 9 is a sectional view of an open structure in FIG. 8;
FIG. 10 is an enlarged structural schematic diagram of a protruding structure in FIG. 4;
FIG. 11 is a left view of a battery cell in an embodiment of the present application;
FIG. 12 is a sectional view of the battery cell in FIG. 11 in the direction A-A;
FIG. 13 is an enlarged schematic diagram of an area D in FIG. 12; and
FIG. 14 is an enlarged structural schematic diagram of an area B in FIG. 12.

With regard to the accompanying drawings, they are not drawn to the actual scale.

### Reference numerals:

1: vehicle; 10: battery; 30: controller; 40: motor; and 11: box body.
20: battery cell; 210: housing; 211: first end cover; 212: second end cover; 22: electrode assembly; 23: tab support; 24: first diaphragm; 25: second diaphragm; 210a: first opening; 220a: second opening; 211a: first electrode terminal; 212a: second electrode terminal; 221: tab; 221a: bent portion; 222: body portion; 601: groove; 210b: inner wall; 2112: insulating member; and 2113: end cover sheet.
2111: first clamping structure; 50: protruding structure; 51: second fixing portion; 52: buckle portion; 53: transition portion; 521: connecting portion; 522: clamping portion; 523: deformation groove; 5221: first portion; and 5222: second portion.
231: second clamping structure; 60: open structure; 61: guide portion; 62: clamping groove portion; 63: first fixing portion; 621: limiting portion; and 622: accommodating portion.

### DETAILED DESCRIPTION OF THE EMBODIMENTS

The implementation of the present application is further described in detail below with reference to the accompanying drawings and embodiments. The detailed description of the embodiments and the accompanying drawings below are intended to illustrate the principles of the present application by examples, but are not intended to limit the scope of the present application, that is, the present application is not limited to the described embodiments.

In the description of the present application, it should be noted that, unless otherwise noted, "a plurality of" means two or more; and orientation or positional relationships indicated by the terms "upper", "lower", "left", "right", "inner", "outer", and the like are only for the convenience of description of the present application and simplification of description rather than indicating or implying that the referenced device or element must have a particular orientation or be constructed and operated in a particular orientation, and thus are not to be construed as limiting the present application. In addition, the terms "first", "second", "third", and the like are used for descriptive purposes only and are not to be construed as indicating or implying relative importance. "Vertical" is not strictly vertical, but within the allowable range of error. "Parallel" is not strictly parallel, but within the allowable range of error.

Orientation words appearing in the following description are all directions shown in the drawings and do not limit the specific structure of the present application. In the description of the present application, it should also be noted that, unless otherwise expressly specified and limited, the terms "mounted", "connected" and "attached" should be understood in a broad sense, for example, it can be "fixedly connected" or "detachably connected", or "integrally connected"; and it can be "directly connected" or "indirectly connected by means of an intermediate medium". The specific meanings of the above terms in the present application can be understood by those of ordinary skill in the art depending on specific circumstances.

The term "and/or" in the present application is simply a description of the association relationship of the associated objects, indicating that there can be three relationships, for example, A and/or B can indicate that A exists alone, A and B exist at the same time, and B exists alone. In addition, the character "/" in the present application generally means that the associated objects are in an "or" relationship.

In the present application, battery cells can include lithium ion secondary batteries, lithium ion primary batteries, lithium sulfur batteries, sodium lithium ion batteries, sodium ion batteries or magnesium ion batteries, which are not limited in the embodiments of the present application. The battery cells can be cylindrical, flat, rectangular or in other shapes, which are also not limited in the embodiments of the present application. The battery cells are generally divided into cylindrical battery cells and square battery cells according to encapsulation manners, which are also not limited in the embodiments of the present application.

A battery provided in the embodiments of the present application refers to a single physical module that includes one or more battery cells to provide a higher voltage and a larger capacity. For example, the battery provided in the present application can include a battery pack. The battery generally includes a box body for encapsulating the one or more battery cells. The box body can prevent a liquid or other foreign matter from affecting charging or discharging of the battery cell.

Each battery cell includes an electrode assembly and an electrolyte, and the electrode assembly includes a positive plate, a negative plate and a diaphragm. The battery cell mainly works by relying on metal ions moving between the positive plate and the negative plate. The positive plate includes positive current collectors and a positive active substance layer, the positive active substance layer coats surfaces of the positive current collectors, the current collectors not coated with the positive active substance layer protrude out of the current collectors coated with the positive active substance layer, and the current collectors not coated with the positive active substance layer serve as positive tabs. The lithium ion battery is taken as an example, the positive current collectors can be made of aluminum, and a positive active substance can be lithium cobaltate, lithium iron phosphate, ternary lithium or lithium manganate. The negative plate includes negative current collectors and a negative active substance layer, the negative active substance layer coats surfaces of the negative current collectors, the current collectors not coated with the negative active substance layer protrude out of the current collectors coated with the negative active substance layer, and the current collectors not coated with the negative active substance layer serve as negative tabs. The negative current collectors can be made of copper, and a negative active substance can be carbon or silicon. In order to ensure passing of a large current without fusing, a plurality of positive tabs are provided and are stacked together, and a plurality of negative tabs are provided and are stacked together. The diaphragm can be made of polypropylene (PP) or polyethylene (PE). In addition, the electrode assembly can be of a wound structure or a laminated structure, and the embodiments of the present application are not limited to this.

In order to meet different power demands, the battery can include a plurality of battery cells, wherein the plurality of battery cells can be connected in series or in parallel or in a hybrid manner, and hybrid connection means a combination of series connection and parallel connection. Optionally, the plurality of battery cells can be connected in series or in parallel or in a hybrid manner firstly to form a battery module, and then a plurality of battery modules are connected in series or in parallel or in a hybrid manner firstly to form the battery. That is, the plurality of battery cells can directly form the battery, and can also form the battery modules firstly, and then the battery modules form the battery. The battery is further arranged in an electricity consumption device to provide electric energy for the electricity consumption device.

Design factors in multiple aspects need to be considered simultaneously for the development of the battery technique, for example, the energy density, the cycle life, the discharge capacity, the charge-discharge rate, the safety, etc., and the structure of the battery cells is critical to the performance of the battery. Each battery cell includes the electrode assembly, an end cover and a housing, wherein a tab of the electrode assembly is connected to the end cover. In order to facilitate the connection between the end cover and the tab, the tab is relatively long; and under the circumstance that the tab is relatively long, the tab or the bent tab is easily reversely inserted into the electrode assembly, resulting in short circuiting.

In order to solve the above-mentioned problem of short circuiting, a tab support is arranged between the tab of the electrode assembly and the end cover to support the tab. During the assembly process of the tab and the end cover, the tab support is closely attached to the root of the tab to enable a bent portion of the tab to be located between the tab support and the end cover, and then the bent portion of the tab is connected to the end cover. However, after the bent portion of the tab is clamped by the tab support, the tab support is not fixed, so that the tab support is unstable in the battery cell. Under the circumstances that the battery cell is shaken and the like, the tab support is prone to movement, thereby affecting the supporting effect of the tab, which is unfavorable for the improvement of the reliability of the battery cell.

In view of this, embodiments of the present application provide a battery cell. In this battery cell, a first end cover is provided with first clamping structures, a tab support is provided with second clamping structures, and the first clamping structures are clamped with the second clamping structures. Thus, the tab support is fixedly connected to the first end cover, the risk of movement of the tab support can be reduced, and the reliability of the battery cell can be improved.

The technical solutions described in the embodiments of the present application are applicable to various devices using batteries, for example, mobile phones, portable apparatuses, laptops, battery cars, electric toys, electric tools, electric vehicles, ships and aircraft, and the aircraft include, for example, airplanes, rockets, space shuttles and spaceships.

It should be understood that the technical solutions described in the embodiments of the present application are not only applicable to the above-mentioned devices, but also to all devices using the batteries. However, for the simplicity in description, the embodiments below are illustrated by taking an electric vehicle as an example.

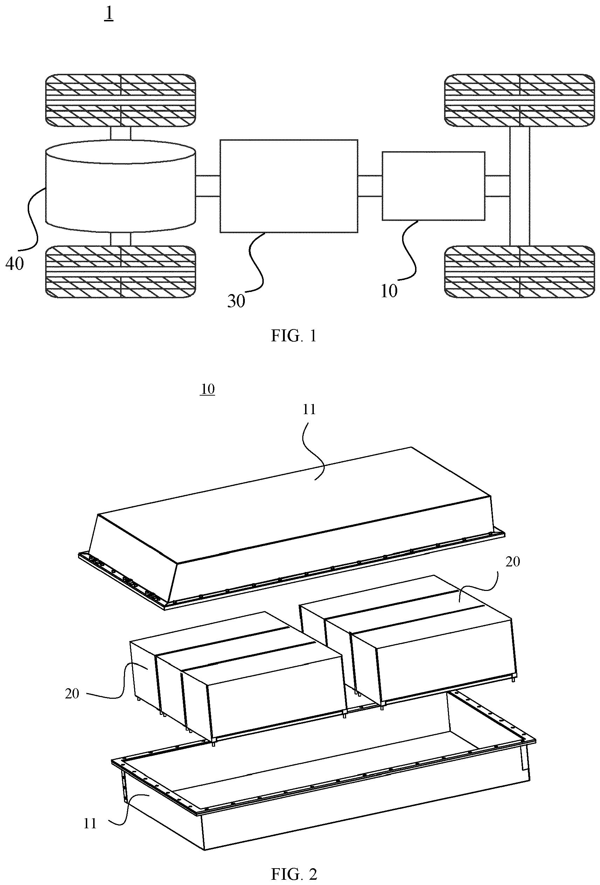

For example, as shown in FIG. 1 which is a structural schematic diagram of a vehicle in an embodiment of the present application, the vehicle 1 can be a fuel vehicle, a gas vehicle or a new energy vehicle, and the new energy vehicle can be a battery electric vehicle, a hybrid electric vehicle or an extended-range vehicle. A motor 40, a controller 30 and a battery 10 can be arranged in the vehicle 1, and the controller 30 is configured to control the battery 10 to supply power to the motor 40. For example, the battery 10 can be arranged at the bottom, the head or the tail of the vehicle 1. The battery 10 can be applied to power supply of the vehicle 1, for example, the battery 10 can serve as an operating power source of the vehicle 1, can be applied to a circuit system of the vehicle 1, and for example, can be applied to meet the working power demands during starting, navigation and operation of the vehicle 1. In another embodiment of the present application, the battery 10 can serve as the operating power source of the vehicle 1, and can also serve as a driving power source of the vehicle 1 to replace or partially replace fuel oil or natural gas to provide driving power for the vehicle 1.

In order to meet different power consumption demands, the battery 10 can include a plurality of battery cells. For example, as shown in FIG. 2 which is a structural schematic diagram of a battery in an embodiment of the present application, the battery 10 can include a plurality of battery cells 20. The battery 10 can further include a box body 11, the box body 11 is of a hollow structure, and the plurality of battery cells 20 are accommodated in the box body 11. For example, the plurality of battery cells 20 are combined in a parallel connection or series connection or hybrid connection manner to be arranged in the box body 11.

Optionally, the battery 10 can further include other structures, which are not detailed here. For example, the battery 10 can further include converging components configured to achieve electrical connection, for example, parallel connection or series connection or hybrid connection, of the plurality of battery cells 20. Specifically, the converging components can be connected to electrode terminals of the battery cells 20 to achieve electrical connection of the battery cells 20. Further, the converging components can be fixed to the electrode terminals of the battery cells 20 through welding. Electrically-conductive mechanisms can penetrate through the box body 11 to further lead out electric energy of the plurality of battery cells 20. Optionally, the electrically-conductive mechanisms can also belong to the converging components.

According to the different power demands, the battery cells 20 in any number can be provided. The plurality of battery cells 20 can be connected in the parallel connection or series connection or hybrid connection manner to achieve the large capacity or high power. Since there may be a lot of battery cells 20 in each battery 10, in order to facilitate mounting, the battery cells 20 can be arranged in groups, and each group of the battery cells 20 forms a battery module. The number of the battery cells 20 in each battery module is not limited and can be set according to the demands. Each battery can include a plurality of battery modules, and these battery modules can be connected in a parallel connection or series connection or hybrid connection manner.

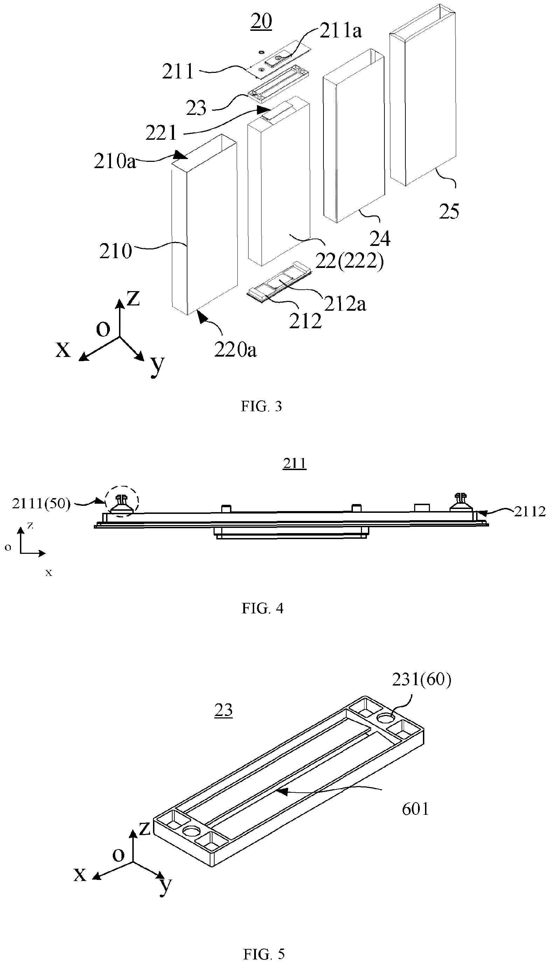

FIG. 3 is a structural schematic diagram of a battery cell in an embodiment of the present application. In the embodiment of the present application, as shown in FIG. 3, the battery cell 20 includes an electrode assembly 22, a housing 210, a first end cover 211 and a tab support 23.

The electrode assembly 22 includes a body portion 222 and a tab 221 extending from the body portion 222.

The body portion 222 of the electrode assembly 22 is electrically connected to a first electrode terminal 211a on the first end cover 211 by means of the tab 221.

Optionally, the tab 221 extends out of the body portion 222 in a thickness direction of the first end cover 211. The tab 221 can include a positive tab and a negative tab, wherein the positive tab and the negative tab can extend out of the same end of the body portion 222, and can also extend out of different ends of the body portion 222. For example, the positive tab extends out of the end of the body portion 222 close to the first end cover 211 in the thickness direction of the first end cover 211, and the negative tab extends out of the end of the body portion 222 away from the first end cover 211 in the thickness direction of the first end cover 211. The relative positions of the positive tab and the negative tab can be specifically set according to the actual demands, and the embodiments of the present application include but are not limited to this.

The housing 210 is provided with a first opening 210a and is configured to accommodate the electrode assembly 22. The first opening 210a can be formed in the end of the housing 210 close to the first end cover 211 in the first direction, and the first direction is the thickness direction of the first end cover 211. For example, as shown in FIG. 3, the first direction is the z direction.

The shape of the housing 210 can be determined according to the shape after one or more electrode assemblies 22 are combined, for example, as shown in FIG. 3, the housing 210 is a hollow cuboid. The embodiments of the present application include but are not limited to this, and the housing 210 can also be a hollow cube, a cylinder or in other shapes.

FIG. 4 is a structural schematic diagram of a first end cover in an embodiment of the present application. As shown in FIGS. 3 and 4, under the circumstance that the battery cell 20 is a square battery cell, the first end cover 211 can be in a flat plate shape, and the first end cover 211 is configured to cover the first opening 210a to seal the first opening 210, thereby isolating the electrode assembly 22 in the housing 210 from the outside.

The first end cover 211 is provided with the first electrode terminal 211a, and the tab 221 of the electrode assembly 22 is electrically connected to the first electrode terminal 211a.

The battery cell 20 can further include a second end cover 212, and the second end cover 212 is arranged opposite the first end cover 211 in the first direction. In the battery cell 20, the housing 210 is provided with a second opening 220a, the second opening 220a is formed in the end of the housing 210 close to the second end cover 212 in the first direction, and the second end cover 212 is configured to cover the second opening 220a.

Optionally, as shown in FIG. 3, the second end cover 212 is provided with a second electrode terminal 212a, and the second electrode terminal 212a is electrically connected to a tab (not shown) close to the second opening 220a. As an example, the second end cover 212 can be of the same structure as the first end cover 211, that is, the second end cover 212 is provided with the same structures as the first clamping structures. As another example, the second end cover 212 is of a different structure from the first end cover 211, and the second end cover 212 is not provided with the same structures as the first clamping structures; and correspondingly, the tab close to the second opening 220a is shorter than the tab 221 close to the first opening 210a (for example, the tab close to the second opening 220a is not bent and is relatively short).

Optionally, the second end cover 212 is not provided with an electrode terminal, the first end cover 211 is provided with the first electrode terminal 211a and an electrode terminal having the polarity opposite to that of the first electrode terminal 211a.

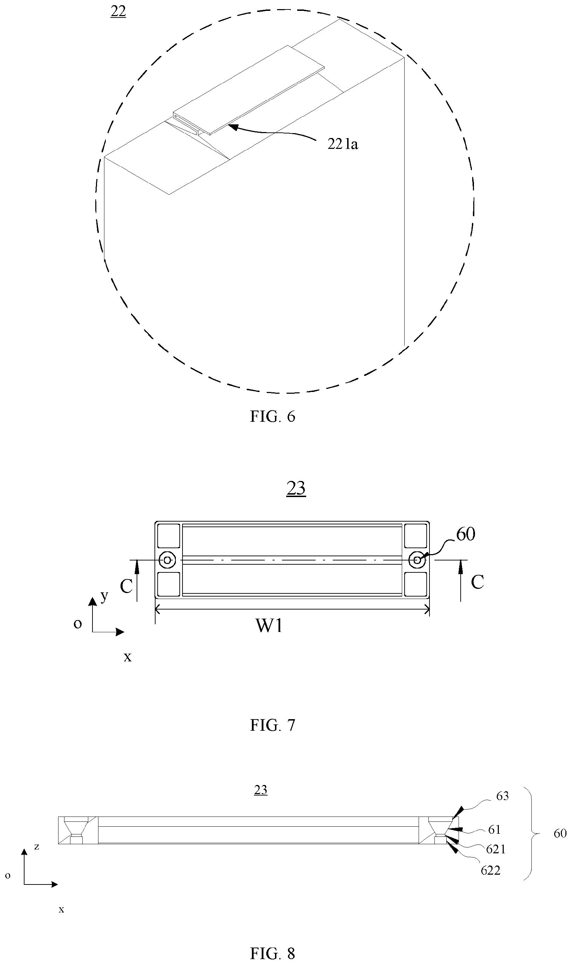

FIG. 5 is a structural schematic diagram of a tab support in an embodiment of the present application, and FIG. 6 is an enlarged schematic diagram of a partial structure of an electrode assembly in FIG. 3. As shown in FIGS. 3, 5 and 6, the tab support 23 is arranged between the body portion 222 and the first end cover 211, and the tab support 23 is configured to support the tab 221. Specifically, the tab support 23 is configured to support a bent portion 221a of the tab 221.

By means of the arrangement of the tab support 23, the risk of short circuiting caused by the fact that the tab 221 is reversely inserted into the electrode assembly 22 can be reduced.

As shown in FIGS. 4 and 5, the first end cover 211 is provided with the first clamping structures 2111, the tab support 23 is provided with the second clamping structures 231, and the first clamping structures 2111 are clamped with the second clamping structures 231. Thus, the tab support 23 is fixedly connected to the first end cover 211, in the event of the phenomena of shaking and inversion of the battery cell 20, the risk of movement of the tab support 23 can be reduced, the risk of weakening of the support effect on the tab 22 during movement of the tab support 23 or pulling of the tab 22 by the tab support 23 can be reduced, and the reliability of the battery cell 20 can be improved.

The embodiments of the present application provide the battery cell 20, and the battery cell 20 includes the electrode assembly 22, the housing 210, the first end cover 211 and the tab support 23. The electrode assembly 22 includes the body portion 222 and the tab 221 extending from the body portion 222. The housing 210 is provided with the first opening 210a and is configured to accommodate the electrode assembly 22, the first end cover 211 is configured to cover the first opening 210a, and the tab support 23 is located between the first end cover 211 and the body portion 222 and is configured to support the tab 221. Thus, the problems of short circuiting and the like caused by the fact that the tab 221 is reversely inserted into the electrode assembly 22 due to the fact that the tab 221 is too long can be avoided, and the reliability of the battery can be improved. The first end cover 211 is provided with the first clamping structures 2111, the tab support 23 is provided with the second clamping structures 231, and the first clamping structures 2111 can be clamped with the second clamping structures 231 to fixedly connect the first end cover 211 to the tab support 23. Thus, under the circumstance that the battery cell 20 is shaken or inverted, the tab support 23 is fixed to the first end cover 211, the risk of loosening or movement of the tab support 23 in the battery cell 20 is reduced, and the reliability of the battery cell 20 can be improved.

In an embodiment of the present application, each of the first clamping structures 2111 is a protruding structure 50 protruding towards the electrode assembly 22 in the first direction, each of the second clamping structures 231 is an open structure 60 corresponding to the respective protruding structure 50, and the first direction is the thickness direction of the first end cover 211.

The first direction can be the z direction in FIGS. 3-5. The protruding structures 50 protrude relative to the first end cover 211 towards the electrode assembly 22 in the z direction, and the open structures 60 correspond to the protruding structures 50 in position.

The open structures 60 can penetrate through the tab support 23 in the first direction, and can also do not penetrate through the tab support 23, that is, the open structures 60 can be grooves recessed towards the electrode assembly 22, and can also be through holes.

In this embodiment, the first clamping structures 2111 are clamped with the second clamping structures 231 by means of the protruding structures 50 and the open structures 60 corresponding to the protruding structures. In addition, the protruding structures 50 and the open structures 60 are convenient to machine and produce, so that the complexity in production can be reduced.

In some other embodiments, each of the second clamping structures 231 is a protruding structure protruding away from the electrode assembly 22, and each of the first clamping structures 2111 is an open structure corresponding to the respective protruding structure. In the embodiments of the present application, according to the actual demands, the first clamping structures 2111 or the second clamping structures 231 can be set as protruding structures, and the second clamping structures 231 or the first clamping structures 2111 can be set as open structures corresponding to the protruding structures.

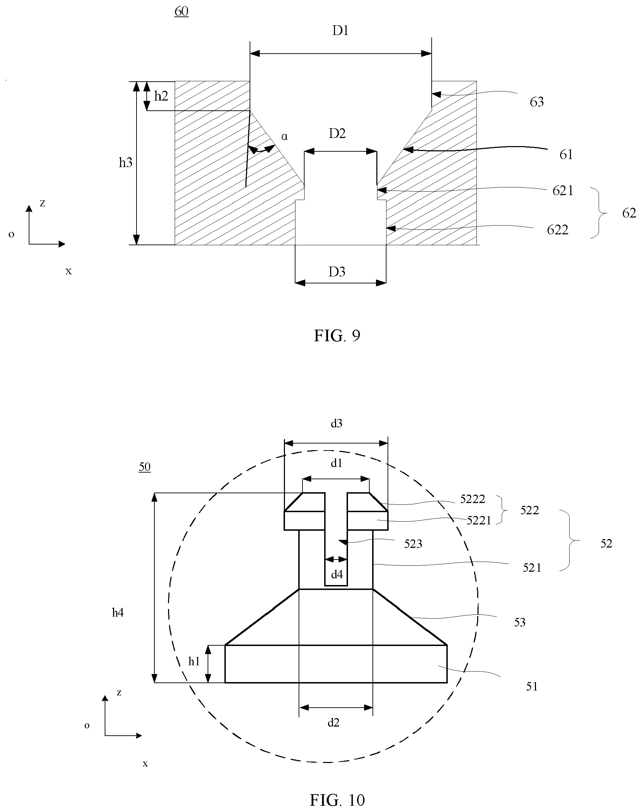

FIG. 7 is a top view of a tab support in an embodiment of the present application, FIG. 8 is a sectional view of the tab support in FIG. 7 in the direction C-C, and FIG. 9 is a sectional view of an open structure in FIG. 8. In an embodiment of the present application, as shown in FIGS. 7-9, each of the open structures 60 includes a guide portion 61, and a radial size of the guide portion 61 is gradually reduced from a first end of the guide portion 61 to a second end of the guide portion 61.

In the first direction, the first end of each guide portion 61 is further from the electrode assembly 22 than the second end of the guide portion 61, and the first direction is the thickness direction of the first end cover 211.

The first end of each guide portion 61 has the maximum radial size, so that during the process of assembling the first end cover 211 and the tab support 23, the guide portion 61 can conveniently guide each protruding structure 50 to be clamped into the respective open structure 60.

Each guide portion 61 can be in a circular truncated cone shape or a prismatic shape, and the radial size of the guide portion 61 is the size of a projection of the guide portion 61 on an xoz plane in the x direction. For example, when each guide portion 61 is in the circular truncated cone shape, the radial size of the guide portion 61 is the diameter of the guide portion 61. For another example, when each guide portion 61 is in the prismatic shape, the radial size of the guide portion 61 is the maximum size of the projection of the guide portion on the xoz plane in the x direction.

The radial size of each guide portion 61 is the size of the guide portion 61 in the second direction, and at different positions in the first direction, the guide portion 61 has different radial sizes. For example, as shown in FIG. 9, the radial size of each guide portion 61 at the first end is D1, and the radial size thereof at the second end is D2. The second direction is a length direction of the first end cover 211.

As shown in FIG. 9, the second direction is the x direction. The second direction can be perpendicular to the first direction, the size of the first end cover 211 in the length direction is greater than the size thereof in a width direction, and the width direction can be the y direction in FIG. 3.

During the process of assembling the tab support 23 and the first end cover 211, when the tab support 23 deviates relative to the first end cover 211 in the second direction, under the action of the guide portions 61, the guide portions 61 can guide the protruding structures 50 to be clamped into the open structures 60 along the guide portions 61. That is, the guide portions 61 can guide the protruding structures 50 to move in the second direction to enable the protruding structures 50 to move to proper positions, so as to enable the protruding structures 50 to be gradually clamped into the open structures 60 along the guide portions 61.

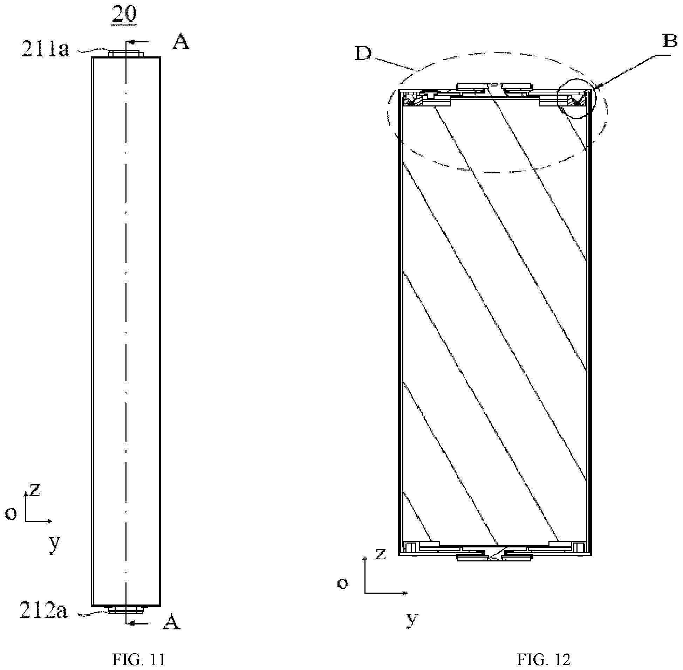

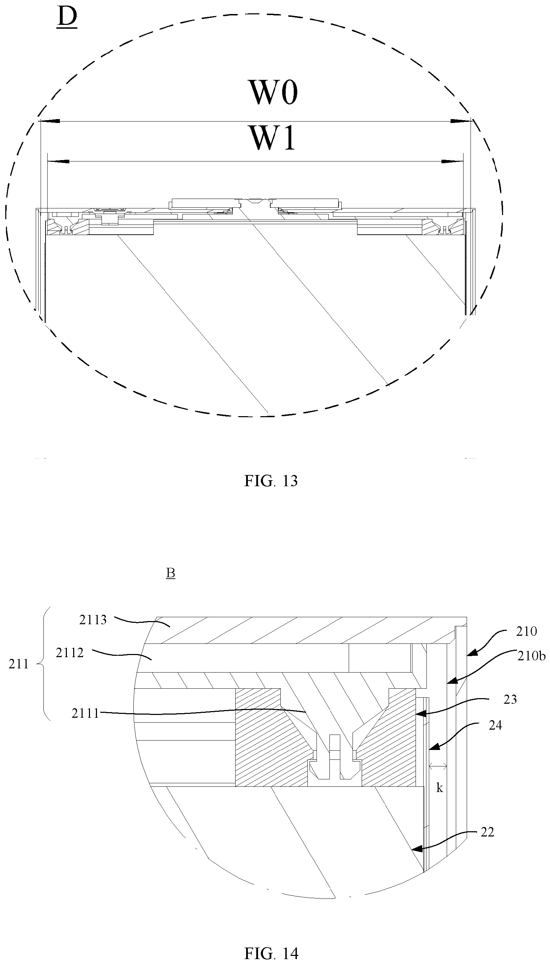

FIG. 10 is an enlarged structural schematic diagram of a protruding structure in FIG. 4, FIG. 11 is a left view of a battery cell in an embodiment of the present application, FIG. 12 is a sectional view of the battery cell in FIG. 11 in the direction A-A, FIG. 13 is an enlarged schematic diagram of an area D in FIG. 12, and FIG. 14 is an enlarged structural schematic diagram of an area B in FIG. 12. In an embodiment of the present application, as shown in FIGS. 8-14, the protruding structures 50, the guide portions 61, the housing 210 and the tab support 23 satisfy the following equation: D1 - d1 ≥ K'.

D1 is a radial size of the first ends of the guide portions 61; d1 is a radial size of first ends of the protruding structures 50, and the first ends of the protruding structures 50 are ends of the protruding structures 50 close to the electrode assembly 22 in the first direction; and K' is the sum of gaps between the housing 210 and the tab support 23 in the second direction, and the second direction is the length direction of the first end cover 211.

In the second direction, other structures can be arranged between the housing 210 and the tab support 23. For example, as shown in FIG. 14, a first diaphragm 24 is further arranged between the housing 210 and the tab support 23. Under such circumstance, a gap k between the housing 210 and the tab support 23 is the distance between the first diaphragm 24 and an inner wall 210b of the housing 210. The gap here refers to the distance, which is not filled with substances, between the housing 210 and the tab support 23 in the second direction.

Optionally, in the second direction, a structural adhesive can also be arranged between the first diaphragm 24 and the tab support 23.

FIG. 14 shows the gap k at one end in the second direction, and at the other end in the second direction, there is also a gap. Under the circumstance that the open structures 60 and the protruding structures 50 are arranged symmetrically in the second direction, K' = 2k.

In this embodiment, by setting the size relationship among the protruding structures 50, the guide portions 61, the housing 210 and the tab support 23, when the tab support 23 relatively greatly deviates from the first end cover 211 in the second direction, and even when the tab support 23 completely deviates to one end of the first end cover 211 in the second direction, the guide portions 61 can guide the protruding structures 50 to enter the open structures 60.

In some embodiments, the protruding structures 50, the guide portions 61, the housing 210 and the tab support 23 satisfy the following equation: D1 - d1 ≥ WO - W1.

D1 is a radial size of the first ends of the guide portions 61; d1 is a radial size of first ends of the protruding structures 50, and the first ends of the protruding structures 50 are ends of the protruding structures 50 close to the electrode assembly 22 in the first direction; WO is a distance between inner walls 210b of the housing 210 in the second direction; and W1 is the size of the tab support 23 in the second direction, and the second direction is the length direction of the first end cover 211.

WO can be the maximum distance between the inner walls 210b of the housing 210 in the second direction; and W1 can be the maximum size of the tab support 23 in the second direction.

An inner wall 210a of the housing 210 is the wall of the housing 210 facing the electrode assembly 22.

In this embodiment, by setting the size relationship among the protruding structures 50, the guide portions 61, the housing 210 and the tab support 23, when the tab support 23 deviates from the first end cover 211 in the second direction, the guide portions 61 can further guide the protruding structures 50 to enter the open structures 60.

In the second direction, under the circumstance that the structures such as the first diaphragm 24 and the like are arranged between the tab support 23 and the housing 210, K' is smaller than WO - W1. According to the different configurations of the battery cell 20 and the different assembly processes, K' = a × (WO - W1), and a is in a range of 0.4-1. For example, a is 0.4, 0.5, 0.8 or any value within the above range.

Optionally, a is in a range of 0.5-0.6, so that the sizes of the guide portions 61 and the protruding structures 50 can be in a more suitable range, which is beneficial to machining and assembly of the guide portions 61 and the protruding structures 50.

Optionally, in the second direction, the distance between outer walls of the housing 210 is the same as the size of the first end cover 211.

Optionally, in the second direction, the size of the electrode assembly 22 is the same as the size of the tab support 23.

In some embodiments, as shown in FIG. 9, each of the open structures 60 further includes a clamping groove portion 62, the clamping groove portion 62 is connected to the second end of the respective guide portion 61 in the first direction, and the respective protruding structure 50 is clamped with the clamping groove portion 62.

The clamping groove portions 62 are arranged at the first ends of the open structures 60, and the first ends of the open structures 60 are the ends of the open structures 60 close to the electrode assembly 22 in the first direction.

The clamping groove portions 62 are connected to and in communication with the guide portions 61 in the first direction, and under the action of the guide portions 61, the protruding structures 50 can enter the clamping groove portions 62 along the guide portions 61 and can be clamped with the clamping groove portions 62. Thus, after the protruding structures 50 are clamped with the clamping groove portions 62, the protruding structures 50 and the open structures 60 are fixed in the first direction, that is, limiting between the protruding structures 50 and the open structures 60 in the first direction is realized, and fixing of the first end cover 211 and the tab support 23 in the first direction is realized.

In some embodiments, each of the clamping groove portions 62 includes a limiting portion 621 and an accommodating portion 622, the accommodating portion 622 is closer to the electrode assembly 22 than the limiting portion 621, and a radial size D2 of the limiting portion 621 is smaller than a radial size D3 of the accommodating portion 622.

The radial size D2 of the limiting portions 621 is the maximum size of the limiting portions 621 in the second direction, and the radial size D3 of the accommodating portions 622 is the size of the accommodating portions 622 in the second direction.

As an example, the limiting portions 621 and the accommodating portions 622 are cylindrical grooves, and at different positions in the first direction, the limiting portions 621 and the accommodating portions 622 have the same radial sizes.

The limiting portions 621 and the accommodating portions 622 are connected to and in communication with each other in the first direction, the accommodating portions 622 are closer to the electrode assembly than the limiting portions 621, and the radial size D2 of the limiting portions 621 is smaller than the radial size D3 of the accommodating portions 622, so that the limiting portions 621 and the accommodating portions 622 form step structures. Thus, after the protruding structures 50 enter the clamping groove portions 62, the protruding structures 50 can be partially accommodated in the accommodating portions 622, and the limiting portions 621 can limit the movement of the protruding structures 50 in the first direction, thereby reducing the risk of separating of the protruding structures 50 from the accommodating portions 622.

In some embodiments, each of the open structures 60 further includes a first fixing portion 63, the first fixing portion 63 is connected to the first end of the respective guide portion 61, and a radial size of the first fixing portion 63 is the same as the radial size D1 of the first end of the guide portion 61.

The first fixing portions 63 are connected to the first ends of the guide portions 61, thus the first fixing portions 63 are in communication with the guide portions 61, and the first fixing portions 63 and the guide portions 61 have the same radial sizes at the junctions. As an example, the first fixing portions 63 are cylindrical grooves, and at different positions in the first direction, the first fixing portions 63 have the same radial sizes. Thus, through arrangement of the first fixing portions 63, the protruding structures 50 can conveniently abut against the first fixing portions 63, and fixing between the protruding structures 50 and the first fixing portions 63 in the second direction can be conveniently realized.

Optionally, the ends of the first fixing portions 63 close to the guide portions 61 are provided with rounded corner structures, so that the interference between the first fixing portions 63 and the protruding structures 50 can be reduced.

In this embodiment, under the circumstance that the protruding structures 50 are clamped into the open structures 60, the first fixing portions 63 can be fixed to the protruding structures 50 in the second direction, thereby limiting the relative movement of the tab support 23 and the first end cover 211 in the second direction.

In some embodiments, an included angle α between each of the guide portions 61 and the first direction is smaller than 45 degrees. Thus, the guide portions 61 can guide the protruding structures 50 to be clamped into the open structures 60.

In some embodiments, the included angle α between each of the guide portions 61 and the first direction is as follows: 30 degrees ≤ α < 45 degrees.

The smaller the included angles α are, the more advantageous it is for the guide portions 61 to guide the protruding structures 50 to enter the open structures 60. Under the circumstance that the radial size of the guide portions 61 is fixed, the smaller the included angle α is, the larger the size of the guide portions 61 in the first direction. 30 degrees ≤ α < 45 degrees, the included angles α have relatively appropriate values, the guide portions 61 have appropriate heights in the first direction, and meanwhile, the guide portions 61 can conveniently guide the protruding structures 50 to be clamped into the open structures 60.

In some embodiments, as shown in FIG. 10, each of the protruding structures 50 includes a second fixing portion 51 and a buckle portion 52, the buckle portion 52 is closer to the electrode assembly 22 than the second fixing portion 51, the buckle portion 52 is clamped with the clamping groove portion 62 of the respective open structure 60, and the second fixing portion 51 abuts against the first fixing portion 63 of the open structure 60.

The second fixing portions 51 can be in direct communication with the buckle portions 52, and can also be in communication with the buckle portions 52 by means of other components. Under the circumstance that the second fixing portions 51 are in direct communication with the buckle portions 52, the second fixing portions 51 and the buckle portions 52 form step structures.

In this embodiment, the buckle portions 52 are clamped with the clamping groove portions 62, thereby limiting the relative movement of the protruding structures 50 and the open structures 60 in the first direction; and the first fixing portions 63 abut against the second fixing portions 51, thereby limiting the relative movement of the protruding structures 50 and the open structures 60 in the second direction. Thus, the tab support 23 is fixedly connected to the first end cover 211 in the first direction and the second direction, and the risk of shaking or movement of the tab support 23 in the battery cell 20 due to factors of shaking and the like of the battery cell 20 can be reduced.

In some embodiments, in the first direction, the size h1 of the second fixing portions 51 is smaller than or equal to the size h2 of the first fixing portions 63. Thus, the second fixing portions 51 can be conveniently fixed in the first fixing portions 63.

The radial size h1 of the second fixing portions 51 is the maximum size of the second fixing portions 51 in the first direction, and the radial size h2 of the first fixing portions 63 is the maximum size of the first fixing portions 63 in the first direction.

As an example, the size h1 of the second fixing portions 51 is equal to the size h2 of the first fixing portions 63, and the ends of the first fixing portions 63 close to the electrode assembly in the first direction are provided with rounded corners. Thus, the second fixing portions 51 can be fixedly connected to the second fixing portions 63 in the second direction, and the risk of interference between the second fixing portions 51 and the second fixing portions 63 can also be reduced.

As an example, the size h1 of the second fixing portions 51 is smaller than the size h2 of the first fixing portions 63. Thus, the risk of reduction of the connection strength of the second fixing portions 51 and the first fixing portions 63 due to suspension of the second fixing portions 51 in the air can be reduced.

In some embodiments, in the first direction, the size h1 of the second fixing portions

51 is greater than 0.8 mm, and/or the size h2 of the first fixing portions 63 is greater than 0.8 mm. Thus, the size of the first fixing portions 63 and the size of the second fixing portions 51 in the first direction are relatively great, the contact area between the first fixing portions 63 and the second fixing portions 51 is relatively large, and the connection strength between the first fixing portions 63 and the second fixing portions 51 can be increased.

In some embodiments, in the first direction, the size h1 of the second fixing portions 51 is as follows: 0.8 mm < h1 ≤ 1.4 mm, and/or the size h2 of the first fixing portions 63 is as follows: 0.8 mm < h2 ≤ 1.4 mm. Thus, the first fixing portions 63 and the second fixing portions 51 have the appropriate sizes in the first direction, and meanwhile, the connection strength between the first fixing portions 63 and the second fixing portions 51 is appropriate.
h1 can be 0.85 mm, 1 mm, 1.2 mm, 1.4 mm or any value within the above range, and h2 can be 0.85 mm, 1 mm, 1.2 mm, 1.4 mm or any value within the above range.

As an example, h1 is 1.4 mm, and h2 is 1.4 mm.

In some embodiments, each of the buckle portions 52 includes a connecting portion 521 and a clamping portion 522, the clamping portion 522 is closer to the electrode assembly 22 than the connecting portion 521, the maximum radial size d3 of the clamping portion 522 is greater than the maximum radial size d2 of the connecting portion 521, and the clamping portion 522 is clamped with the respective clamping groove portion 62. Thus, the clamping portions 522 can be clamped in the clamping groove portions 62, and the risk of separating of the clamping portions 522 from the clamping groove portions 62 can be reduced.

As an example, the connecting portion 521 has the same radial sizes at different positions in the first direction; and each of the clamping portion 522 includes a first portion 5221 and a second portion 5222, the second portion 5222 is closer to the electrode assembly 22 than the first portion 5221, and in the first direction and in the direction pointing to the electrode assembly 22, a radial size of the second portion 5222 is gradually reduced.

In some embodiments, each of the buckle portions 52 is provided with a deformation groove 523, and the deformation groove 523 extends in the first direction from the end of the buckle portion 52 close to the electrode assembly 22. Thus, the deformation grooves 523 are deformed when the clamping portions 522 enter the clamping groove portions 62, so as to enable the clamping portions 522 to be clamped into the clamping groove portions 62. When the buckle portions 52 pass the limiting portions, the size of the buckle portions 52 in the second direction can be reduced, so that the buckle portions 52 can enter the accommodating portions to realize clamping of the buckle portions 52 and the clamping groove portions 62.

In some embodiments, the clamping groove portions 62, the buckle portions 52 and the deformation grooves 523 are as follows: d3 > D2 > d3 - d4, where, d3 is the maximum radial size of the clamping portions 522, D2 is the maximum radial size of the limiting portions 621, and d4 is the maximum radial size of the deformation grooves 523.

d4 can be the maximum distance between two groove wall surfaces of each of the deformation grooves 523 arranged opposite each other in the second direction.

The maximum radial size d3 of the clamping portions 522 is greater than the maximum radial size of the limiting portions 621, so that after the clamping portions 522 are clamped into the clamping groove portions 62, the clamping portions 522 cannot be separated from the clamping groove portions 62; and D2 > d3 - d4, so that after the deformation grooves are deformed, the clamping portions 522 can pass the limiting portions 621 to enter the clamping groove portions 62. d3 > D2 > d3 - d4, so that the clamping portions 522 can enter the clamping groove portions 62, and cannot be separated from the clamping groove portions 62.

Optionally, the maximum radial size D3 of the accommodating portions 622 is greater than the maximum radial size d3 of the clamping portions 522, so that the clamping portions 522 can be accommodated in the accommodating portions 622 without deformation of the deformation grooves 523.

In some embodiments, the buckle portions 52 and the clamping groove portions 62 are as follows: d3 - D2 > 0.5 mm. Thus, the buckle portions 52 and the clamping groove portions 62 have many overlap areas in the second direction, and the buckle portions 52 are not prone to separation from the clamping groove portions 62.

In some embodiments, the clamping groove portions 62, the buckle portions 52 and the deformation grooves 523 are as follows: D2 - d3 + d4 > 0.2 mm. Thus, the situation that it is difficult to embed the buckle portions 52 in the clamping groove portions 62 due to the excessively small radial size of the limiting portions 621 can be reduced, and the buckle portions 52 can be embedded in the clamping groove portions 62.

In some embodiments, each of the protruding structures 50 further includes a transition portion 53, and in the first direction, the transition portion 53 is respectively connected to the respective second fixing portion 51 and the respective buckle portion 52.

As an example, in the first direction and in the direction pointing to the electrode assembly 22, the radial size of the transition portions 53 is gradually reduced. At the junctions of the transition portions 53 and the second fixing portions 51, the transition portions 53 and the second fixing portions 51 have the same radial sizes; and at the junctions of the transition portions 53 and the buckle portions 52, the transition portions 53 and the buckle portions 52 have the same radial sizes.

Optionally, the radial size of the transition portions 53 is the same as the radial size of the connecting portions 521, and step structures are formed between the transition portions 53 and the second fixing portions 51. All that is required for the transition portions 53 is to connect the second fixing portions 511 and the buckle portions 52, and the embodiments of the present application include but are not limited to this.

In some embodiments, in the first direction, the size h3 of the protruding structures 50 is smaller than the size h4 of the open structures 60.

The size h3 of the protruding structures 50 is the maximum size of the protruding structures 50 in the first direction. The size h4 of the protruding structures 60 is the maximum size of the open structures 60 in the first direction.

When the open structures 60 are grooves, abrasions between the protruding structures 50 and the open structures 60 can be conveniently reduced; and when the open structures 60 are through holes penetrating through the tab support 23, the protruding structures 50 cannot protrude out of the open structures 60, so that the risk that the protruding structures 50 abut against and damage the electrode assembly 22 can be reduced.

In some embodiments, a cross section of each of the first clamping structures 2111 and the second clamping structures 231 is circular. The cross sections are perpendicular to the first direction, that is, the cross sections are parallel with the first end cover 211. Thus, the first clamping structures 2111 and the second clamping structures 231 can be assembled and limited in both the length direction and the width direction of the first end cover 211.

Optionally, each of the first clamping structures 2111 and the second clamping structures 231 includes a rotation body structure. For example, when the second clamping structures 231 are the open structures 60, the limiting portions 621, the accommodating portions 622 and the first fixing portions 63 of the open structures 60 are all cylindrical rotation body structures, and the guide portions 61 are circular-truncated-cone-shaped rotation body structures. For example, when the first clamping structures 2111 are the protruding structures 50, the second fixing portions 51 can be cylindrical rotation body structures, the transition portions 53 can be circular-truncated-cone-shaped rotation body structures, the connecting portions 521 can be cylindrical rotation body structures with grooves in the middles, the second portions 5222 of the clamping portions 522 can be circular-truncated-cone-shaped rotation body structures, and the first portions 5221 of the clamping portions 522 can be cylindrical rotation body structures.

In some embodiments, the tab support 23 is provided with a groove 601 extending in the second direction, and the tab 221 is configured to pass through the groove 601 to be connected to the first end cover 211.

For example, after the bent portion 221a of the tab 221 passes through the groove 601, the end of the tab 221 away from the electrode assembly 22 is connected to the first electrode terminal 211a. Thus, the tab support 23 separates the bent portion 221a of the tab 221 from the portion of the electrode assembly 22 excluding the tab 221, and the risk of short circuiting caused by the fact that the bent portion 221a of the tab 221 is inserted into the electrode assembly 22 can be reduced.

In some embodiments, the battery cell 20 further includes the first diaphragm 24, and the first diaphragm 24 is sleeved on an outer surface of the electrode assembly 22 and is located in the housing 210.

As an example, the first diaphragm 24 is an insulating thermoplastic diaphragm, for example, the first diaphragm 24 is a mylar film.

Through arrangement of the first diaphragm 24, the electrode assembly 22 can be isolated from the housing 210, and the risk of short circuiting due to the contact between the electrode assembly 22 and the housing 210 can be reduced; in addition, the tab support 23 can be connected to the electrode assembly 22 by means of the diaphragm 22, thereby facilitating assembly of the battery cell 20.

In some embodiments, the battery cell further includes a second diaphragm 25, and the second diaphragm 25 is sleeved on an outer surface of the housing 210. The second diaphragm 25 can play a role in protecting the battery cell 20 and insulating the battery cell 20 from the external environment, and thus the reliability of the battery cell 20 can be improved.

As an example, the second diaphragm 25 is an insulating film, for example, the second diaphragm 25 is a "blue film".

In some embodiments, the battery cell 20 further includes the second end cover 212, and the second end cover 212 is arranged opposite the first end cover 211 in the first direction.

In some embodiments, the first end cover 211 further includes an insulating member 2112 and an end cover sheet 2113, the insulating member 2112 is configured to isolate the end cover sheet 2113 from the electrode assembly 22, and the insulating member 2112 and the first clamping structures 2111 are of an integrally-formed structure. The insulating member 2112 are configured to realize the electric insulation between the end cover sheet 2113 and the body portion 222 of the electrode assembly 22, so that the risk of short circuiting can be reduced. In addition, the insulating member 2112 and the first clamping structures 2111 are of the integrally-formed structure, which is beneficial to machining.

The end cover sheet 2113 can be made of a metal and can conduct electricity, and the end cover sheet is provided with the first electrode terminal 211a. In addition, the insulating member 2112 is arranged between the end cover sheet and the body portion 222 of the electrode assembly 22, and is configured to realize the electric insulation between the end cover sheet and the body portion 222.

The first clamping structures 2111 and the second clamping structures 213 can be made of electrically-insulating materials, so as to ensure the electric insulation between the body portion 222 of the electrode assembly 22 and the end cover sheet 2113.

In some embodiments, the first end cover 211 is provided with a plurality of the first clamping structures 2111, and the tab support 23 is provided with a plurality of the second clamping structures 231 corresponding to the plurality of first clamping structures 2111. Thus, the connection firmness between the first clamping structures 2111 and the second clamping structures 231 can be enhanced. "A plurality of' in the embodiments of the present application means two or more.

Optionally, the first end cover 211 is provided with two first clamping structures 2111, the two first clamping structures 2111 are respectively located at two ends of the first end cover 211 in the second direction; and correspondingly, the tab support 23 is provided with two second clamping structures 231.

The present application provides the battery cell 20, and the battery cell 20 includes the electrode assembly 22, the housing 210, the first end cover 211, the second end cover 212, the first diaphragm 24, the second diaphragm 25 and the tab support 23. The tab support 23 is provided with the open structures 60, and each of the open structures 60 includes the first fixing portion 63, the guide portion 61 and the clamping groove portion 62 which are in communication in sequence in the first direction. The first end cover 211 is provided with the protruding structures 50 protruding towards the electrode assembly 22, and each of the protruding structures 50 is sequentially provided with the second fixing portion 51, the transition portion 53 and the buckle portion 52 in the first direction. During the process of assembling the battery cell 20, when the first end cover 211 deviates from the tab support 23 in the second direction, under the action of the guide portions 61, the buckle portions 52 can be clamped into the clamping groove portions 62 and be clamped with the clamping groove portions 62, and the second fixing portions 511 abut against the first fixing portions 63, thereby connecting the first end cover 211 and the tab support 23 and fix same in the second direction and the first direction. The first direction is the thickness direction of the first end cover 211, and the second direction is the length direction of the first end cover 211.

During the process of assembling the battery cell 20, the first end cover 211 and the housing 210 are fixed, the electrode assembly 22 equipped with the tab support 23 is mounted in the housing 210 via the second opening 220a, the second clamping structures 231 of the tab support 23 cooperate with the first clamping structures 2111 of the first end cover 211 to connect the first end cover 211 to the tab support 23 or the electrode assembly 22. Generally, an expansion space for the electrode assembly 22 is reserved in the housing 210, so that after the electrode assembly 22 equipped with the tab support 23 is mounted in the housing 210, the tab support 23 may deviate from the first end cover 211 in the second direction, resulting in the open structures 60 deviating from the protruding structures 50. Through arrangement of the guide portions 61, the guide portions 61 guide the protruding structures 50 to enter the open structures 60, and then clamping of the open structures 60 and the protruding structures 50 is realized.

As an example, the steps of assembling the battery cell 20 is briefly described below. The electrode assembly 22, the tab support 23, the first diaphragm 24 and the second end cover 212 are connected into a whole. For example, the first diaphragm 24 coats the outer surface of the electrode assembly 22, then the first diaphragm 24 is connected to the second end cover 212 and the tab support 23 through hot melting to form a whole. Before the first diaphragm 24 is connected to the tab support 23, the tab 221 can pass through the groove 601 of the tab support 23 corresponding to the tab 221, so that the tab support 23 supports the tab 221. After the whole is formed, the whole is placed into the housing 210 via the second opening 220a, and after the tab support 23 is connected to the first end cover 211, the first end cover 211 is connected to the housing 210.

The embodiments of the present application provide the battery 10, including the battery cell 20 in any one of the above-mentioned embodiments.

The battery 10 can further include the box body 11, and the box body 11 is configured to accommodate the battery cell 20.

The embodiments of the present application provide the electricity consumption device, including the battery 10 in the above-mentioned embodiments. The battery 10 is configured to supply power to the electricity consumption device.

Although the present application has been described with reference to the preferred embodiments, various improvements can be made thereto and components therein can be replaced with equivalents without departing from the scope of the present application. In particular, the various technical features mentioned in the various embodiments can be combined in any manner so long as there is no structural conflict. The present application is not restricted to the particular embodiments disclosed herein, but to include all the technical solutions falling within the scope of the claims.

## Claims

1. A battery cell, comprising:
an electrode assembly (22) which comprises a body portion (222) and a tab (221) extending from the body portion (222);
a housing (210) configured to accommodate the electrode assembly (22) and provided with a first opening (210a);
a first end cover (211) configured to cover the first opening (210a); and
a tab support (23) located between the first end cover (211) and the body portion (222) and configured to support the tab (221);
wherein the first end cover (211) is provided with a first clamping structure (2111), the tab support (23) is provided with a second clamping structure (231), and the first clamping structure (2111) is clamped with the second clamping structure (231).

2. The battery cell according to claim 1, wherein the first clamping structure (2111) is a protruding structure (50) protruding towards the electrode assembly (22) in a first direction, the second clamping structure (231) is an open structure (60) corresponding to the protruding structure (50), and the first direction is a thickness direction of the first end cover (211).

3. The battery cell according to claim 2, wherein the open structure (60) comprises a guide portion (61), a radial size of the guide portion (61) is gradually reduced from a first end of the guide portion (61) to a second end of the guide portion (61), and in the first direction, the first end of the guide portion (61) is further from the electrode assembly (22) than the second end of the guide portion (61).

4. The battery cell according to claim 3, wherein the protruding structure (50), the guide portion (61), the housing (210) and the tab support (23) satisfy the following equation: D1 - d1 ≥ K',
wherein D1 is a radial size of the first end of the guide portion (61); d1 is a radial size of a first end of the protruding structure (50), and the first end of the protruding structure (50) is an end of the protruding structure (50) close to the electrode assembly (22) in the first direction; and K' is the sum of gaps between the housing (210) and the tab support (23) in a second direction, and the second direction is a length direction of the first end cover (211).

5. The battery cell according to claim 3 or 4, wherein the protruding structure (50), the guide portion (61), the housing (210) and the tab support (23) satisfy the following equation: D1 - d1 ≥ W0 - W1,
wherein D1 is a radial size of the first end of the guide portion (61); d1 is a radial size of a first end of the protruding structure (50), and the first end of the protruding structure (50) is an end of the protruding structure (50) close to the electrode assembly (22) in the first direction; W0 is a distance between inner walls of the housing (210) in a second direction; and W1 is the size of the tab support (23) in the second direction, and the second direction is a length direction of the first end cover (211).

6. The battery cell according to any one of claims 3-5, wherein the open structure (60) further comprises a clamping groove portion (62), the clamping groove portion (62) is connected to the second end of the guide portion (61) in the first direction, and the clamping groove portion (62) is clamped with the protruding structure (50).

7. The battery cell according to claim 6, wherein the clamping groove portion (62) comprises a limiting portion (621) and an accommodating portion (622), the accommodating portion (622) is closer to the electrode assembly (22) than the limiting portion (621), and a radial size D2 of the limiting portion (621) is smaller than a radial size D3 of the accommodating portion (622).

8. The battery cell according to any one of claims 3-7, wherein the open structure (60) further comprises a first fixing portion (63), the first fixing portion (63) is connected to the first end of the guide portion (61), and a radial size of the first fixing portion (63) is the same as the radial size D1 of the first end of the guide portion (61).

9. The battery cell according to any one of claims 3-8, wherein an included angle between the guide portion (61) and the first direction is smaller than 45 degrees.

10. The battery cell according to claim 9, wherein the included angle between the guide portion (61) and the first direction is greater than or equal to 30 degrees.

11. The battery cell according to any one of claims 3-10, wherein the protruding structure (50) comprises a second fixing portion (51) and a buckle portion (52), the buckle portion (52) is closer to the electrode assembly (22) than the second fixing portion (51), the buckle portion (53) is clamped with the clamping groove portion (62) of the open structure (60), and the second fixing portion (51) abuts against the first fixing portion (63) of the open structure (60).

12. The battery cell according to claim 11, wherein in the first direction, the size of the second fixing portion (51) is smaller than or equal to the size of the first fixing portion (63).

13. The battery cell according to claim 11 or 12, wherein in the first direction, the size of the second fixing portion (51) is greater than 0.8 mm, and/or the size of the first fixing portion (63) is greater than 0.8 mm.

14. The battery cell according to claim 13, wherein in the first direction, the size h1 of the second fixing portion (51) is as follows: 0.8 mm < h1 ≤ 1.4 mm, and/or the size h2 of the first fixing portion (63) is as follows: 0.8 mm < h2 ≤ 1.4 mm.

15. The battery cell according to any one of claims 11-14, wherein the buckle portion (52) comprises a connecting portion (521) and a clamping portion (522), the clamping portion (522) is closer to the electrode assembly (22) than the connecting portion (521), the maximum radial size of the clamping portion (522) is greater than the maximum radial size of the connecting portion (521), and the clamping portion (522) is clamped with the clamping groove portion (62).

16. The battery cell according to any one of claims 11-15, wherein the buckle portion (52) is provided with a deformation groove (523), and the deformation groove (523) extends in the first direction from the end of the buckle portion (52) close to the electrode assembly (22).

17. The battery cell according to claim 16, wherein the clamping groove portion (62), the buckle portion (52) and the deformation groove (523) are as follows: d3 > D2 > d3 - d4,
wherein d3 is the maximum radial size of the clamping portion (522), D2 is the maximum radial size of the limiting portion (621) of the clamping groove portion (62), and d4 is the maximum radial size of the deformation groove (523).

18. The battery cell according to claim 17, wherein the buckle portion (52) and the clamping groove portion (62) are as follows: d3 - D2 > 0.5 mm.

19. The battery cell according to claim 17 or 18, wherein the clamping groove portion (62), the buckle portion (52) and the deformation groove (523) are as follows: D2 - d3 + d4 > 0.2 mm.

20. The battery cell according to any one of claims 11-19, wherein each of the protruding structure (50) further comprises a transition portion (53), and in the first direction, the transition portion (53) is respectively connected to the second fixing portion (51) and the buckle portion (52).

21. The battery cell according to any one of claims 2-20, wherein in the first direction, the size of the protruding structure (50) is smaller than or equal to the size of the open structure (60).

22. The battery cell according to any one of claims 1-21, wherein a cross section of the first clamping structure (2111) and the second clamping structure (231) is circular.

23. The battery cell according to any one of claims 1-22, wherein the tab support is provided with a groove (601) extending in the second direction, and the tab (221) is configured to pass through the groove (601) to be connected to the first end cover (211).

24. The battery cell according to any one of claims 1-23, wherein the first end cover (211) is provided with a plurality of the first clamping structures (2111), and the tab support (23) is provided with a plurality of the second clamping structures (231) corresponding to the plurality of first clamping structures (2111).

25. The battery cell according to any one of claims 1-24, further comprising a first diaphragm (24), wherein the first diaphragm (24) is sleeved on an outer surface of the electrode assembly (22) and is located in the housing (210).

26. The battery cell according to any one of claims 1-25, further comprising a second diaphragm (25), wherein the second diaphragm (25) is sleeved on an outer surface of the housing (210).

27. The battery cell according to any one of claims 1-26, wherein the first end cover (211) further comprises an end cover sheet (2113) and an insulating member (2112), the insulating member (2112) is configured to isolate the end cover sheet (2113) from the electrode assembly (22), and the insulating member (2112) and the first clamping structures (2111) are of an integrally-formed structure.

28. The battery cell according to any one of claims 1-27, further comprising a second end cover (212), wherein the second end cover (212) and the first end cover (211) are arranged opposite each other in the first direction, and the first direction is the thickness direction of the first end cover (211).

29. A battery, comprising the battery cell according to any one of claims 1-28.

30. An electricity consumption device, comprising the battery according to claim 29.
